# FASCICULE DE BREVET EUROPEEN

(11) **EP 3 626 138 B1**
(45) Date de publication et mention de la délivrance du brevet: **16.08.2023**
(21) Numéro de dépôt: 19196989.8
(22) Date de dépôt: 12.09.2019
(51) Int. Cl.: A47J 31/44, A47J 43/07

(54) **DISPOSITIF D'AGITATION ROTATIF DE MACHINE DE PRÉPARATION DE BOISSONS ÉQUIPE D'UN DISPOSITIF D'ACCOUPLEMENT MAGNÉTIQUE**
DREHBARE RÜHRVORRICHTUNG FÜR GETRÄNKEZUBEREITUNGSMASCHINE, DIE MIT EINER MAGNETISCHEN KUPPLUNGSVORRICHTUNG AUSGESTATTET IST
ROTARY STIRRING DEVICE FOR A BEVERAGE PREPARATION MACHINE PROVIDED WITH A MAGNETIC COUPLING DEVICE

(30) Priorité: 24.09.2018 FR 1858669
(43) Date de publication de la demande: 25.03.2020
(73) Titulaire: SEB S.A., 69130 Ecully (FR)
(72) Inventeur: BEAUDET, Olivier, 61140 RIVES D'ANDAINE (FR); JEROME, Mickael, 53100 MAYENNE (FR); LEFORGEAIS, Michel, 14250 TILLY SUR SEULLES (FR); MORIN, Gilles, 69290 POLLIONNAY (FR)
(74) Mandataire: SEB Développement

(56) Documents cités:
- EP-A1- 2 721 980
- WO-A2-2010/035091
- FR-A1- 3 056 896
- US-A1- 2013 000 490

## Description

### Domaine technique

La présente invention concerne les appareils de distribution de boissons qui comportent un dispositif d'agitation rotatif avec distribution d'eau chaude et/ou de vapeur, notamment des machines de préparation de boissons à base de lait chaud ou froid moussé (cappuccino, latté, chocolat, cocktail...) ou à base de crème fouettée (cafés et chocolat spéciaux).

### Etat de la technique

Il est connu des machines de préparation de boissons qui comportent notamment un dispositif d'agitation rotatif, lequel comprend un outil rotatif autour d'un axe vertical et destiné à agiter une préparation contenue dans un récipient et un conduit d'acheminement d'eau chaude et/ou de vapeur vers l'outil rotatif en sorte de diluer et/ou réchauffer ladite préparation dans le récipient en la faisant mousser.

Un exemple d'une telle machine de préparation de boissons est décrit dans la demande de brevet EP2721980A1.

Selon cette demande de brevet EP2721980A1, le conduit d'acheminement comporte une partie tubulaire qui s'étend le long de l'axe vertical entre une première extrémité qui est accouplée à l'outil rotatif et une seconde extrémité qui est accouplée de manière amovible à un arbre d'entrainement au moyen d'un dispositif d'accouplement. La possibilité de démonter la partie tubulaire avec l'outil rotatif facilite leur nettoyage sous l'eau ou dans un lave-vaisselle.

Le dispositif d'accouplement mis en oeuvre dans cette demande de brevet EP2721980A1 présente divers inconvénients. En effet, l'assemblage et le retrait de la partie tubulaire vis-à-vis de l'arbre d'entraînement nécessitent une manipulation du dispositif d'accouplement, laquelle n'est pas intuitive. Lors de l'assemblage, l'utilisateur peut mal enclencher le dispositif d'accouplement ; durant la rotation, la partie tubulaire peut malencontreusement se détacher de l'arbre d'entraînement. En outre, la pression de l'eau chaude et/ou de la vapeur à l'intérieur de la partie tubulaire peut générer des fuites au niveau du dispositif d'accouplement.

### Résumé de l'invention

La présente invention pallie les inconvénients précités. A cet effet, l'invention concerne un dispositif d'agitation rotatif d'une machine de préparation de boissons. Le dispositif d'agitation rotatif comprend un outil rotatif autour d'un axe A et destiné à agiter une préparation contenue dans un récipient, par exemple du lait. Le dispositif d'agitation rotatif comprend également un conduit d'acheminement d'eau chaude et/ou de vapeur vers l'outil rotatif. Ce conduit d'acheminement comporte une partie tubulaire qui s'étend le long de l'axe A entre une première extrémité qui est accouplée à l'outil rotatif au moyen d'un premier dispositif d'accouplement et une seconde extrémité qui est accouplée à un arbre d'entrainement creux au moyen d'un second dispositif d'accouplement pour réaliser une connexion fluidique d'eau chaude et/ou de vapeur.

De manière remarquable, le second dispositif d'accouplement est un dispositif d'accouplement magnétique configuré pour générer une force d'attraction magnétique le long de l'axe A entre une paroi motrice de l'arbre d'entrainement et une paroi réceptrice de la seconde extrémité de la partie tubulaire de sorte à transmettre le mouvement de rotation de l'arbre d'entrainement à l'outil rotatif, la seconde extrémité de la partie tubulaire et l'arbre d'entrainement comportant chacun un élément magnétique ou magnétisable.

Ainsi, l'accouplement de la partie tubulaire avec l'arbre d'entraînement s'effectue tout simplement en les emboîtant l'un dans l'autre, sans aucune manipulation complémentaire, le dispositif d'accouplement magnétique assurant alors une force d'attraction magnétique favorisant ledit emboîtement jusqu'à ce que la partie tubulaire atteigne une position de butée vis-à-vis de l'arbre d'entraînement, position de butée selon laquelle lesdits éléments sont accouplés. Cette position de butée indique à l'utilisateur que l'accouplement est effectué convenablement. Inversement, le retrait de la partie tubulaire avec l'outil rotatif s'effectue simplement en exerçant une force de traction sur ladite partie tubulaire, supérieure à la force d'attraction magnétique, ce qui la dégage de l'arbre d'entrainement. La rotation de l'arbre d'entraînement engendre celle de la partie tubulaire et de l'outil rotatif, par l'intermédiaire du dispositif d'accouplement magnétique qui permet d'assujettir lesdits éléments.

Le premier dispositif d'accouplement entre la première extrémité de la partie tubulaire et l'outil rotatif peut être de conceptions très variées. Ainsi, le premier dispositif d'accouplement peut assurer un montage permanent entre la première extrémité et l'outil rotatif de sorte qu'ils sont difficilement démontables voire pas du tout, par exemple en réalisant la partie tubulaire et l'outil rotatif au moyen d'une seule et même pièce ou en assemblant la partie tubulaire et l'outil rotatif au moyen de vis de fixation ou d'un collage. Au contraire, ce premier dispositif d'accouplement peut assurer un montage de manière amovible entre la première extrémité et l'outil rotatif, par exemple au moyen d'un système d'assemblage à baïonnette ou d'un emboîtement entre lesdits éléments. Le démontage de l'outil rotatif vis-à-vis de la première extrémité de la partie tubulaire sera préférable afin de permettre leur nettoyage indépendamment ou le changement d'outil rotatif, par exemple.

Selon une réalisation du dispositif d'agitation rotatif, les éléments magnétiques ou magnétisables présentent une forme tubulaire. Le terme « tubulaire » au sens de l'invention couvre tant les éléments magnétiques ayant une forme tubulaire en tant que telle que les éléments magnétiques ayant une forme d'anneau, de tore, de disque, de rondelle ou de palet, avec un orifice en son centre adapté pour permettre le passage de l'arbre d'entraînement. Ces formes permettent d'avoir une répartition homogène de la force d'attraction magnétique, autour de l'arbre d'entraînement et de la seconde extrémité de la partie tubulaire.

Selon une réalisation préférentielle du dispositif d'agitation rotatif, l'arbre d'entrainement comporte un élément magnétique formé par un aimant permanent. Selon une réalisation préférentielle du dispositif d'agitation rotatif, la seconde extrémité de la partie tubulaire comporte un élément magnétisable formé par une pièce réalisée au moins partiellement en un matériau ferromagnétique. On pourrait prévoir une conception inverse à celle précitée, sans sortir du cadre de l'invention.

Selon une réalisation du dispositif d'agitation rotatif, la paroi motrice de l'arbre d'entrainement et la paroi réceptrice de la seconde extrémité de la partie tubulaire s'étendent chacune dans un plan perpendiculaire à l'axe A. Cela permet d'augmenter la surface de contact et d'attraction magnétique entre la paroi motrice et la paroi réceptrice.

Selon l'invention le second dispositif d'accouplement comporte un système de butées mécaniques anti-glissement qui assure un alignent automatique entre la paroi motrice de l'arbre d'entrainement et la paroi réceptrice de la seconde extrémité de la partie tubulaire, lors de l'accouplement sous l'effet de la force d'attraction magnétique. La présence d'un tel système de butées mécaniques anti-glissement assure un auto positionnement lors de l'accouplement de la seconde extrémité de la partie tubulaire avec l'arbre d'entraînement, sous l'action seule de la force d'attraction magnétique exercée par le dispositif d'accouplement magnétique. En outre, ce système de butées mécaniques anti-glissement évite tout risque de rotation selon l'axe A entre l'arbre d'entraînement et la partie tubulaire, du fait notamment de la résistance exercée sur l'outil rotatif qui tourne dans la préparation alimentaire contenue dans le récipient.

Bien entendu, il est possible de prévoir d'autres systèmes de butées mécaniques qui nécessiteraient de positionner angulairement la seconde extrémité de la partie tubulaire vis-à-vis de l'arbre d'entraînement jusqu'à ce que les butées mécaniques soient enclenchées, la force d'attraction magnétique exercée par le dispositif d'accouplement assurant ensuite le maintien de l'accouplement et des butées entre la seconde extrémité de la partie tubulaire et l'arbre d'entraînement. De préférence, le système de butées mécaniques comporte au moins un organe proéminent d'entrainement agencé sur la paroi motrice et au moins un logement de réception agencé sur la paroi réceptrice, l'au moins un organe proéminent d'entrainement, une fois en place dans l'au moins un logement de réception, assurant un entrainement positif - c'est-à-dire sans glissement - de l'outil rotatif. De préférence, l'au moins un organe proéminent d'entrainement comporte une rampe en forme d'hélice agencée sur un cercle de centre appartenant à l'axe A, l'au moins un logement de réception présentant une forme complémentaire.

Selon une réalisation, le dispositif d'agitation rotatif comporte un dispositif de détection de la présence de la partie tubulaire sur l'arbre d'entrainement. La partie tubulaire comporte une excroissance en diamètre au niveau de l'élément magnétique ou magnétisable qui coupe un faisceau dudit dispositif de détection lorsque ladite partie tubulaire est assemblée sur l'arbre d'entrainement. De préférence, le dispositif de détection est un dispositif de détection optique comportant une cellule émettrice d'un faisceau lumineux et une cellule réceptrice dudit faisceau, la partie tubulaire coupant le faisceau lumineux lorsqu'elle est assemblée sur l'arbre d'entrainement. De préférence, le dispositif de détection optique comporte au moins un guide optique de renvoi à 90° du faisceau lumineux. Ainsi, il est possible de détecter l'accouplement de la seconde extrémité de la partie tubulaire avec l'arbre d'entraînement, ce qui permet de générer de la vapeur uniquement si l'outil rotatif est effectivement en place, prêt à être utilisé. De plus, la détection de la présence de l'outil rotatif permet également de savoir si l'utilisateur a retiré ou non l'outil rotatif en fin de recette, ce qui permet par exemple de programmer la machine de préparation de boissons pour gérer le nettoyage de l'outil rotatif après un nombre défini de préparations de boissons au moyen dudit outil rotatif, par exemple en émettant à signal d'information sur le nettoyage de l'outil rotatif à réaliser.

Selon l'invention, le dispositif d'agitation rotatif comporte un moteur électrique destiné à entrainer l'arbre d'entraînement.

Selon le dispositif d'agitation rotatif, l'arbre d'entrainement comporte une partie creuse d'acheminement d'eau chaude et/ou de vapeur qui communique avec la partie tubulaire lors de leur accouplement. Ainsi l'eau chaude et/ou la vapeur circule dans la partie creuse de l'arbre d'entraînement puis dans la partie tubulaire. Le dispositif d'agitation rotatif comprend une boite à vapeur comportant une chambre, un canal radial d'entrée vapeur, deux paliers étanches de guidage de l'arbre d'entrainement. En outre, la partie creuse de l'arbre d'entraînement est configurée pour relier la chambre à la partie tubulaire en sorte d'acheminer l'eau chaude et/ou la vapeur.

### Brève description des figures

La description suivante met en évidence les caractéristiques et avantages de la présente invention. Cette description s'appuie sur des figures, parmi lesquelles :
- Les figures 1 et 2 illustrent deux vues d'ensemble d'un mode de réalisation d'une machine de préparation de boissons comportant un dispositif d'agitation rotatif selon l'invention, suivant deux positions dudit dispositif ;
- La figure 3 illustre une coupe du dispositif d'agitation rotatif mettant notamment en évidence l'assemblage de la partie tubulaire avec l'arbre d'entraînement et le conduit d'acheminement de l'eau chaude et/ou de la vapeur ;
- La figure 4 met en évidence la présence d'un dispositif de détection de l'accouplement de la seconde extrémité de la partie tubulaire avec l'arbre d'entraînement ;
- Les figures 5 et 6 mettent en évidence le système de butées mécaniques anti-glissement sur le second dispositif d'accouplement ;
- La figure 7 illustre une réalisation préférentielle d'un élément magnétisable mis en oeuvre au niveau de la seconde extrémité de la partie tubulaire ;
- La figure 8 met en évidence la présence de capteur optique sur le dispositif d'agitation rotatif ;
- Les figures 9 et 10 illustrent une variante de mise en oeuvre du second dispositif d'accouplement.

### Description détaillée

Dans la suite de la description, la machine de préparation de boissons est dénommée « machine ».

Dans la suite de la description, les termes « horizontal », « vertical », « inférieur », « supérieur », « longitudinal », « transversal », « haut », « bas », qui pourraient être employés, le seront en considération de la position de la machine reposant sur un plan de travail, en situation d'usage.

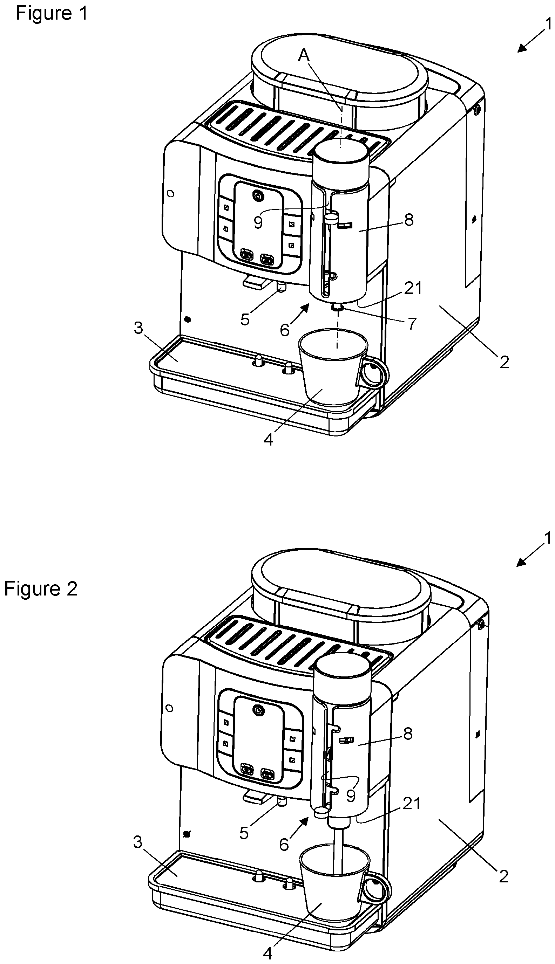

Sur les figures 1 et 2, la machine 1 comporte notamment un bâti 2, un support 3 sur lequel un récipient 4 peut être disposé durant la préparation d'une boisson, et un dispositif de distribution qui comporte notamment une buse 5 permettant la distribution d'une boisson à base de café, de thé et/ou de chocolat, par exemple. Ces caractéristiques sont déjà connues sur les machines de préparation de boissons, elles ne sont donc pas détaillées, l'homme du métier pouvant se référer aux machines existantes.

La machine 1 comprend également un dispositif d'agitation rotatif 6 comprenant un outil rotatif 7 autour d'un axe A et destiné à agiter une préparation contenue dans le récipient 4, par exemple du lait. Cet axe A est défini verticalement sur la machine 1. Le dispositif d'agitation rotatif 6 est monté en translation selon l'axe A, à l'intérieur d'une pièce de guidage 8 agencée sur le bâti 2, de sorte à permettre son déplacement selon une position haute illustrée en figure 1, où l'outil rotatif 7 est dégagé du récipient 4, et une position basse illustrée en figure 2, où l'outil rotatif 7 est inséré dans le récipient 4.

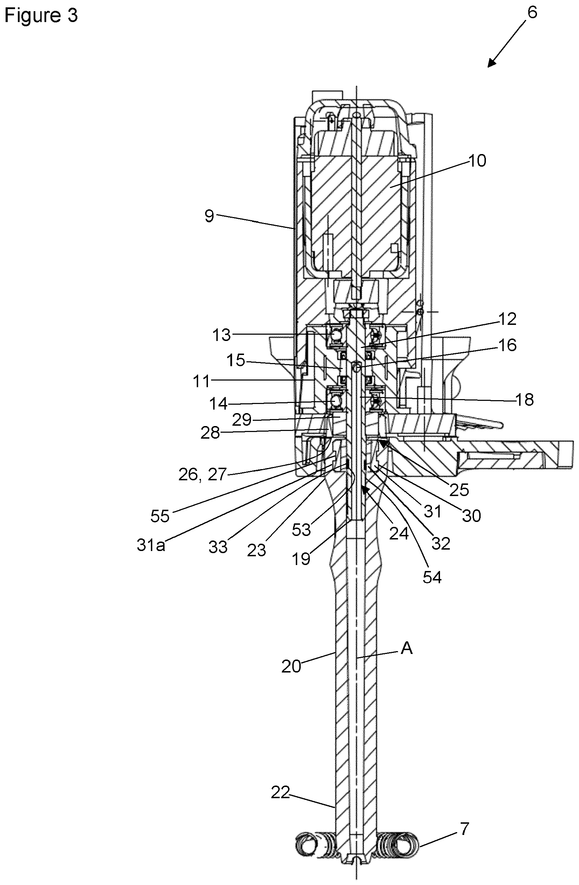

Tel qu'illustré sur la figure 3, le dispositif d'agitation rotatif 6 comporte un corps 9 monté en translation selon l'axe A sur la pièce de guidage 8 illustrée en figures 1 et 2, au moyen de glissières (non illustrées). A l'intérieur du corps 9 sont agencés un moteur électrique 10 et une boîte à vapeur 11. Le moteur électrique 10 entraîne en rotation selon l'axe A un arbre d'entrainement 12, lequel est monté en liaison pivot d'axe A vis-à-vis de la boîte à vapeur 11 au moyen de deux paliers de roulement étanches 13, 14, l'étanchéité mise en oeuvre entre la boîte à vapeur 11, les paliers 13, 14 et l'arbre d'entraînement 12 permettant de définir une chambre 15. Un canal radial (non illustré) traverse la boîte vapeur 11 et débouche dans la chambre 15, ce canal radial étant raccordé à un conduit souple (non illustré) qui permet les déplacements en translation selon l'axe A du dispositif d'agitation rotatif 6 vis-à-vis de la pièce de guidage 8, sans contrainte. Le conduit souple alimente en eau chaude et/ou en vapeur la chambre 15. L'arbre d'entrainement 12 présente une partie creuse 18 s'étendant selon l'axe A et débouchant d'un côté dans la chambre 15 grâce à un orifice 16 traversant ladite partie creuse 18 et, de l'autre côté, sur l'extrémité inférieure 19 de l'arbre d'entraînement 12.

Tel qu'illustré sur la figure 3, le dispositif d'agitation rotatif 6 comprend une partie tubulaire 20 qui s'étend selon l'axe A et passe au travers d'un fond 21 (illustré en figures 1 et 2) de la pièce de guidage 8. L'extrémité inférieure 22 de la partie tubulaire 20 est assemblée avec l'outil rotatif 7, de préférence par emboîtement ou au moyen d'un assemblage à baïonnette. L'extrémité supérieure 23 de la partie tubulaire 20 est accouplée de manière amovible avec l'arbre d'entrainement 12 ; ainsi, le canal souple, le conduit radial, la chambre 15, la partie creuse 18 de l'arbre d'entraînement 12 et la partie tubulaire 20 définissent un conduit 24 d'acheminement d'eau chaude et/ou de vapeur vers l'outil rotatif 7.

Tel qu'illustré en regard des figures 3 à 7, l'accouplement de l'extrémité supérieure 23 de la partie tubulaire 20 avec l'arbre d'entraînement 12 est mis en oeuvre par l'intermédiaire d'un dispositif d'accouplement magnétique 25. Ce dispositif d'accouplement magnétique 25 met en oeuvre une force d'attraction magnétique dans le sens de l'axe A, entre une paroi motrice 26 de l'arbre d'entraînement 12 et une paroi réceptrice 27 de l'extrémité supérieure 23 de la partie tubulaire 20, ces parois motrice 26 et réceptrice 27 s'étendant dans des plans perpendiculaires à l'axe A. Cette force d'attraction magnétique permet de plaquer la paroi réceptrice 27 contre la paroi motrice 26 en sorte de maintenir assemblée l'extrémité supérieure 23 de la partie tubulaire 20 avec l'arbre d'entraînement 12 et d'engendrer la rotation de la paroi réceptrice 27 sous l'action de la rotation de la paroi motrice 26.

Le dispositif d'accouplement magnétique 25 comprend une pièce de support 28 qui comporte la paroi motrice 26 sur sa face inférieure 28a, cette pièce de support 28 étant emboîtée en force sur l'arbre d'entraînement 12 de sorte que ladite pièce de support 28 et ledit arbre d'entraînement 12 sont assujettis et forment un ensemble. Le dispositif d'accouplement magnétique 25 comprend un aimant permanent 29 qui présente une forme tubulaire, comme l'illustre la figure 3, cet aimant permanent 29 étant logé à l'intérieur de la pièce de support 28 préalablement à son emboîtement en force sur l'arbre d'entraînement 12 qui passe au travers dudit aimant permanent 29. Des moyens de blocage en rotation (non illustrés) sont prévus entre la pièce de support 28 et l'aimant permanent 29 en sorte d'éviter la rotation de l'aimant permanent 29 selon l'axe A, à l'intérieur de la pièce de support 28. A titre d'exemple, on peut prévoir un emboîtement en force de l'aimant permanent 29 dans la pièce de support 28.

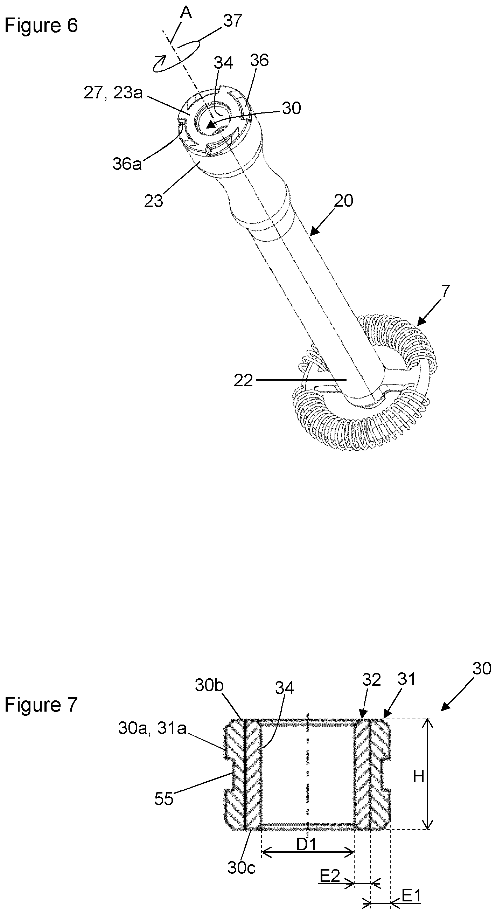

Le dispositif d'accouplement 25 comprend un insert 30 qui présente une forme tubulaire, comme l'illustrent les figures 3 et 7. L'extrémité supérieure 23 de la partie tubulaire 20, qui comporte la paroi réceptrice 27 sur sa face supérieure 23a, est surmoulée sur les parois extérieures 30a, 30b, 30c de l'insert 30, ce qui permet d'assujettir cet insert 30 sur ladite extrémité supérieure 23. Selon une réalisation préférentielle illustrée en figure 7, l'insert 30 comprend une bague externe 31 et une bague interne 32 qui sont montées en force l'une dans l'autre pour former une seule et même pièce (l'insert 30). La bague externe 31 est réalisée dans un matériau ferromagnétique et la bague interne 32 est réalisée dans un acier inoxydable résistant à la corrosion en ambiance vapeur. Cette bague interne 32 est montée glissante sur l'arbre d'entraînement 12. De préférence, la bague externe 31 est réalisée dans un inox 420 ou 430 ferromagnétique et la bague interne 32 est réalisée dans un inox 304. Grâce au surmoulage de l'extrémité supérieure 23 de la partie tubulaire 20 sur l'insert 30, la bague externe 31 est complètement revêtue par la matière - un polymère - de ladite extrémité supérieure 23, ce qui protège ladite bague externe 31 contre la corrosion.

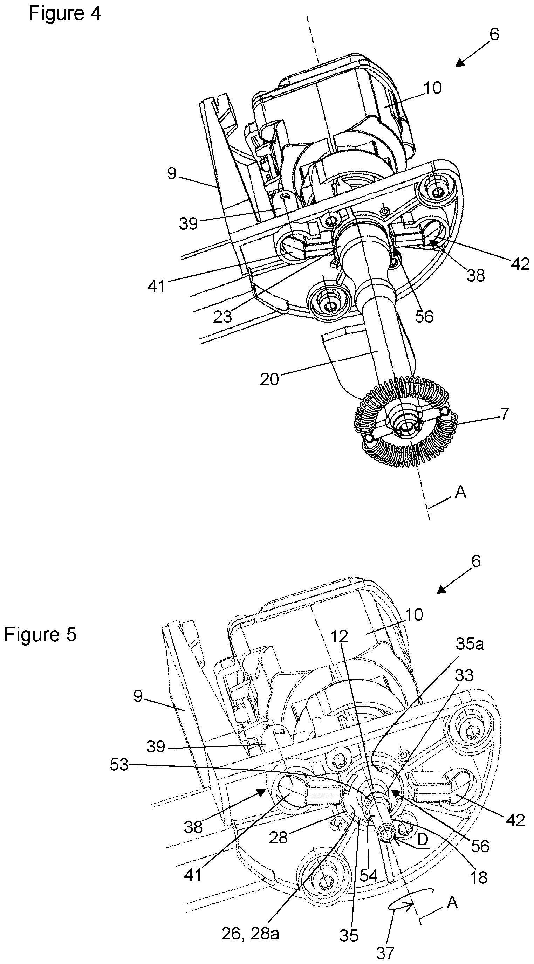

En regard des figures 3 et 5, un joint d'étanchéité 33 est logé dans une gorge 53 agencée sur l'arbre d'entraînement 12 et vient au contact de la paroi interne 34 de la bague interne 32 lorsque la paroi réceptrice 27 est plaquée contre la paroi motrice 26, comme l'illustre la figure 3. Durant l'utilisation du dispositif d'agitation rotatif 6, l'injection d'eau chaude et/ou de vapeur peut engendrer une montée en pression dans le conduit 24 d'acheminement ; l'étanchéité mise en oeuvre grâce au joint d'étanchéité 33 évite tout risque de fuite d'eau chaude et/ou de vapeur au niveau du raccordement entre la partie tubulaire 20 et l'arbre d'entrainement 12.

Tel qu'illustré sur la figure 3, la paroi interne 34 de la bague interne 32 vient en contact avec la paroi externe 54 de la partie creuse 18 de l'arbre d'entraînement 12. Cette paroi externe 54 présente un diamètre externe D qui est très légèrement inférieur au diamètre interne D1 de la paroi interne 34 - de quelques microns - de sorte à réaliser un montage coulissant de la bague interne 32 sur ladite partie creuse 18. La bague interne 32 présente une hauteur H qui est supérieure au diamètre externe D pour assurer une maîtrise convenable de la rotation de la partie tubulaire 20 avec l'outil rotatif 7 et un guidage convenable de l'extrémité supérieure 23 de la partie tubulaire lors de son accouplement avec l'arbre d'entraînement 12. De préférence, la hauteur H est au moins cinq fois supérieure au diamètre externe D.

De préférence la bague externe 31 a une épaisseur E1 supérieure à 0,5 mm, de préférence supérieure à 1 mm afin de disposer d'une surface magnétisante suffisante pour réaliser l'attraction magnétique par l'aimant permanent 29. De même, la bague interne 32 a une épaisseur E2 supérieure à 0,5 mm, de préférence supérieure à 1 mm en sorte d'éviter une déformation de la bague interne 32 lors de son emboîtement en force dans la bague externe 31. Une gorge 55 est mise en oeuvre sur le contour externe 31a de la bague externe 31 afin d'améliorer l'ancrage de l'insert 30 dans l'extrémité supérieure 23 de la partie tubulaire 20 lors du surmoulage.

En regard des figures 5 et 6, la paroi motrice 26 comprend quatre organes proéminents 35 sous la forme de rampes hélicoïdales uniformément réparties autour d'un cercle de centre passant par l'axe A. La paroi réceptrice 27 comprend, quant à elle, quatre logements 36 ayant une forme complémentaire à celle des quatre organes proéminents 35. Le nombre d'organes proéminents 35 et de logements 36 pourrait être différent, par exemple de trois. Lors de l'emboîtement de l'extrémité supérieure 23 de la partie tubulaire 20 sur l'arbre d'entraînement 12, l'aimant permanent 29 exerce une force d'attraction magnétique sur l'insert 30, ce qui attire la paroi réceptrice 27 vers la paroi motrice 26, les organes proéminents 35 se logeant au moins partiellement respectivement dans les logements 36 ; la forme hélicoïdale des organes proéminents 35 et des logements 36 et la force d'attraction magnétique assurent alors un auto positionnement desdits organes proéminents 35 dans lesdits logements 36 jusqu'à ce que la paroi réceptrice 27 vienne totalement en butée contre la paroi motrice 26 où lesdits éléments sont auto-alignés. Durant la rotation de l'arbre d'entraînement 12, qui s'effectue dans le sens de la flèche 37, les extrémités 35a des organes proéminents 35 viennent en butée contre les extrémités 36a des logements 36, ce qui assure un entraînement positif de la partie tubulaire 20. Ainsi, les organes proéminents 35 et les logements 36 mettent en oeuvre un système de butées mécaniques anti-glissement qui assure un alignement automatique entre la paroi motrice 26 et la paroi réceptrice 27.

En regard des figures 4 à 6 et 8, le dispositif d'agitation rotatif 6 comprend un dispositif de détection 38 qui permet de détecter l'accouplement de l'extrémité supérieure 23 de la partie tubulaire 20 avec l'arbre d'entraînement 12 grâce audit dispositif d'accouplement magnétique 25. Le dispositif de détection 38 comprend une cellule 39 émettrice d'un faisceau lumineux, de préférence un émetteur optique infrarouge qui présente l'avantage d'être peu sensible à la lumière extérieure. Le dispositif de détection 38 comprend également une cellule 40 réceptrice dudit faisceau lumineux, de préférence un capteur optique infrarouge qui présente également l'avantage d'être peu sensible à la lumière extérieure. Le dispositif de détection 38 comporte deux guides optiques 41, 42 de renvoi à 90° du faisceau lumineux, ce qui permet de loger les cellules émettrice 39 et réceptrice 40 verticalement à l'intérieur du corps 9 du dispositif d'agitation rotatif 6 et d'effectuer un renvoi d'angle du faisceau lumineux sous le corps 9, selon une trajectoire horizontale passant dans une zone d'accouplement 56 entre l'extrémité supérieure 23 de la partie tubulaire 20 et l'arbre d'entraînement 12. Un capot 43 se positionne sous le corps 9 pour assurer une protection des guides optiques 41, 42 et éviter les perturbations de la lumière extérieure. L'extrémité supérieure 23 de la partie tubulaire 20, dans laquelle est logé l'insert 30, comporte une excroissance en diamètre qui permet de couper le faisceau lumineux lors de l'accouplement de ladite extrémité supérieure 23 avec l'arbre d'entrainement 12. Cette coupure du faisceau lumineux signale donc la présence de la partie tubulaire 20 avec l'outil rotatif 7 sur le dispositif d'agitation rotatif 6.

La mise en place de la partie tubulaire 20, assemblée avec l'outil rotatif 7, sur l'arbre d'entrainement 12 s'effectue simplement par emboîtement, comme expliqué précédemment. Leur retrait s'effectue également simplement en tirant dessus pour les dégager ; il suffit d'exercer une force de traction supérieure à la force d'attraction magnétique de l'aimant permanent 29.

La description qui précède d'un mode préférentiel de réalisation n'est pas limitative, des variantes pouvant être envisagées sans sortir du cadre de l'invention.

A titre d'exemple, la machine 1 pourrait comprendre simplement le dispositif d'agitation rotatif 6, la préparation de café, de thé et/ou de chocolat pouvant être réalisée sur une machine de préparation de boissons indépendante disposant uniquement d'un dispositif de distribution de boissons.

L'insert 30 pourrait être réalisé au moyen d'une seule bague en matériau ferromagnétique, ladite bague étant alors noyée dans l'extrémité supérieure 23 de la partie tubulaire par un surmoulage.

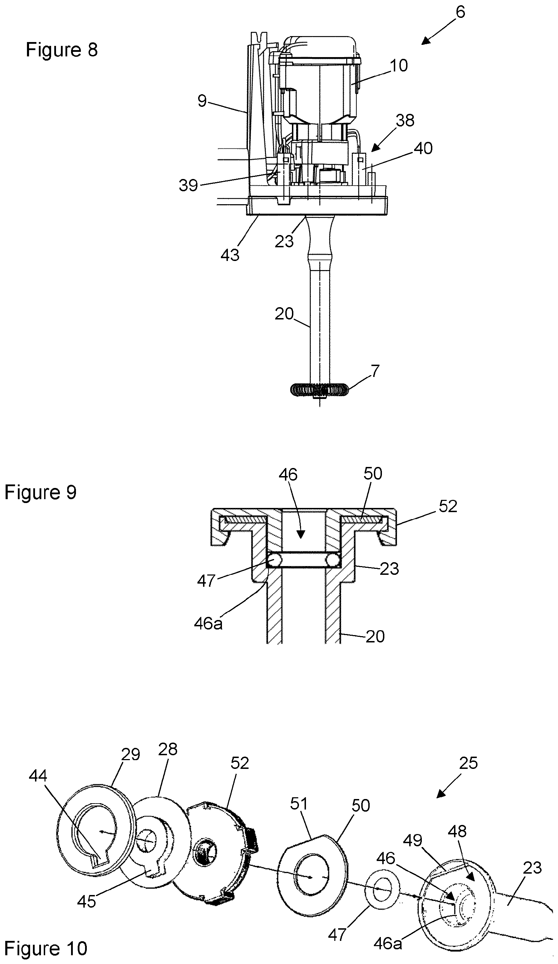

On peut aussi prévoir d'autres mises en oeuvre du dispositif d'accouplement 25. A titre d'exemple, en regard des figures 9 et 10, le dispositif d'accouplement 25 comprend un aimant permanent 29 sous la forme d'une rondelle qui est bloquée en rotation vis-à-vis de la pièce de support 28 grâce à une encoche 44 sur l'aimant permanent 29 et une protubérance 45 sur la pièce de support 28 de forme complémentaire à celle de ladite encoche 44. L'extrémité supérieure 23 de la partie tubulaire 20 comprend un premier logement 46 dans le fond 46a duquel vient se loger un joint d'étanchéité 47 ; cette extrémité supérieure 23 comprend également un second logement 48 muni d'un méplat 49, dans lequel vient se loger une rondelle 50 en matériau ferromagnétique également muni d'un méplat 51, ce qui assure un blocage en rotation de la rondelle 50 logée dans le second logement 48. Un couvercle 52 vient s'encliqueter sur l'extrémité supérieure 23, pour maintenir la rondelle 50 dans le second logement 48 et le joint d'étanchéité 47 dans le fond 46a du premier logement 46. Ce joint d'étanchéité 47 vient en contact avec l'arbre d'entraînement 12 lors de l'accouplement de l'extrémité supérieure 23 de la partie tubulaire 20 avec ledit arbre d'entraînement 12. On peut prévoir aussi entre cette pièce de support 28 et ce couvercle 52 un système de butées mécaniques anti-glissement comparable à celui décrit précédemment en regard des figures 5 et 6.

## Revendications

1. Dispositif d'agitation rotatif (6) d'une machine de préparation de boissons (1), ledit dispositif comprenant un outil rotatif (7) autour d'un axe A et destiné à agiter une préparation contenue dans un récipient (4) et un conduit (24) d'acheminement d'eau chaude et/ou de vapeur vers l'outil rotatif, ledit conduit d'acheminement comportant une partie tubulaire (20) qui s'étend le long de l'axe A entre une première extrémité (22) qui est accouplée à l'outil rotatif au moyen d'un premier dispositif d'accouplement et une seconde extrémité (23) qui est accouplée à un arbre d'entrainement (12) creux au moyen d'un second dispositif d'accouplement pour réaliser une connexion fluidique d'eau chaude et/ou de vapeur **caractérisé en ce que** le second dispositif d'accouplement est un dispositif d'accouplement magnétique (25) configuré pour générer une force d'attraction magnétique le long de l'axe A entre une paroi motrice (26) de l'arbre d'entrainement et une paroi réceptrice (27) de la seconde extrémité de la partie tubulaire de sorte à transmettre le mouvement de rotation de l'arbre d'entrainement à l'outil rotatif, la seconde extrémité de la partie tubulaire et l'arbre d'entrainement comportant chacun un élément magnétique ou magnétisable et **en ce que** le second dispositif d'accouplement comporte un système de butées mécaniques anti-glissement qui assure un alignement automatique entre la paroi motrice (26) de l'arbre d'entrainement (12) et la paroi réceptrice (27) de la seconde extrémité (23) de la partie tubulaire (20), lors de l'accouplement sous l'effet de la force d'attraction magnétique.

2. Dispositif d'agitation rotatif (6) selon la revendication 1, caractérisé en ce les éléments magnétiques ou magnétisables présentent une forme tubulaire.

3. Dispositif d'agitation rotatif (6) selon l'une quelconque des revendications 1 à 2, **caractérisé en ce que** l'arbre d'entrainement (6) comporte un élément magnétique formé par un aimant permanent (29).

4. Dispositif d'agitation rotatif (6) selon l'une quelconque des revendications 1 à 3, **caractérisé en ce que** la seconde extrémité (23) de la partie tubulaire (20) comporte un élément magnétisable formé par une pièce (30) réalisée au moins partiellement en un matériau ferromagnétique.

5. Dispositif d'agitation rotatif (6) selon l'une quelconque des revendications 1 à 4, **caractérisé en ce que** la paroi motrice (26) de l'arbre d'entrainement (12) et la paroi réceptrice (27) de la seconde extrémité (23) de la partie tubulaire (20) s'étendent chacune dans un plan perpendiculaire à l'axe A.

6. Dispositif d'agitation rotatif (6) selon l'une quelconque des revendications 1 à 5, **caractérisé en ce que** le système de butées mécaniques comporte au moins un organe proéminent (35) d'entrainement agencée sur la paroi motrice (26) et au moins un logement (36) de réception agencé sur la paroi réceptrice (27), l'au moins un organe proéminent d'entrainement une fois en place dans l'au moins un logement de réception assurant un entrainement positif de l'outil rotatif (7).

7. Dispositif d'agitation rotatif (6) selon la revendication 6, **caractérisé en ce que** l'au moins un organe proéminent (35) d'entrainement comporte une rampe en forme d'hélice agencée sur un cercle de centre appartenant à l'axe A, l'au moins un logement (36) de réception présentant une forme complémentaire.

8. Dispositif d'agitation rotatif (6) selon l'une quelconque des revendications 1 à 7, **caractérisé en ce qu'**il comporte un dispositif de détection (38) de la présence de la partie tubulaire (20) sur l'arbre d'entrainement (12), la partie tubulaire comportant une excroissance en diamètre au niveau de l'élément magnétique ou magnétisable qui coupe un faisceau dudit dispositif de détection lorsqu'elle est assemblée sur l'arbre d'entrainement.

9. Dispositif d'agitation rotatif (6) selon la revendication 8, **caractérisé en ce que** le dispositif de détection (38) est un dispositif de détection optique comportant une cellule émettrice (39) d'un faisceau lumineux et une cellule réceptrice (40) dudit faisceau, la partie tubulaire (20) coupant le faisceau lumineux lorsqu'elle est assemblée sur l'arbre d'entrainement (12).

10. Dispositif d'agitation rotatif (6) selon la revendication 9, **caractérisé en ce que** le dispositif de détection optique comporte au moins un guide optique (41, 42) de renvoi à 90° du faisceau lumineux.

11. Dispositif d'agitation rotatif (6) selon l'une quelconque des revendications 1 à 10, **caractérisé en ce qu'**il comporte un moteur électrique (10) destiné à entrainer l'arbre d'entraînement (12).

12. Dispositif d'agitation rotatif (1) selon l'une quelconque des revendications 1 à 11, **caractérisé en ce que** l'arbre d'entrainement porte une partie creuse (18) d'acheminement d'eau chaude et/ou de vapeur qui communique avec la partie tubulaire (20) lors de leur accouplement et **en ce que** ledit dispositif d'agitation (6) comprend une boite à vapeur (11) comportant une chambre (15), un canal radial d'entrée vapeur, deux paliers étanches (13, 14) de guidage de l'arbre d'entrainement, la partie creuse (18) reliant la chambre (15) à la partie tubulaire (20).

## Patentansprüche

1. Drehbare Rührvorrichtung (6) für eine Getränkezubereitungsmaschine (1), wobei die Vorrichtung ein Werkzeug (7), das um eine Achse A drehbar und dazu bestimmt ist, eine in einem Behälter (4) enthaltene Zubereitung zu rühren, und eine Leitung (24) zum Zuführen von heißem Wasser und/oder Dampf zu dem drehbaren Werkzeug umfasst, wobei die Zuführleitung einen rohrförmigen Abschnitt (20) umfasst, der sich entlang der Achse A zwischen einem ersten Ende (22), das mittels einer ersten Kupplungsvorrichtung mit dem drehbaren Werkzeug gekoppelt ist, und einem zweiten Ende (23) erstreckt, das mittels einer zweiten Kupplungsvorrichtung mit einer hohlen Antriebswelle (12) gekoppelt ist, um eine Fluidverbindung für heißes Wasser und/oder Dampf herzustellen, **dadurch gekennzeichnet, dass** die zweite Kupplungsvorrichtung eine magnetische Kupplungsvorrichtung (25) ist, die so konfiguriert ist, dass sie eine magnetische Anziehungskraft entlang der Achse A zwischen einer Antriebswand (26) der Antriebswelle und einer Abtriebswand (27) des zweiten Endes des rohrförmigen Abschnitts erzeugt, um die Drehbewegung der Antriebswelle auf das drehbare Werkzeug zu übertragen, wobei das zweite Ende des rohrförmigen Abschnitts und die Antriebswelle jeweils ein magnetisches oder magnetisierbares Element umfassen, und dadurch, dass die zweite Kupplungsvorrichtung ein System von mechanischen Antischlupfanschlägen umfasst, das bei der Kupplung unter der Wirkung der magnetischen Anziehungskraft eine automatische Ausrichtung zwischen der Antriebswand (26) der Antriebswelle (12) und der Abtriebswand (27) des zweiten Endes (23) des rohrförmigen Abschnitts (20) sicherstellt.

2. Drehbare Rührvorrichtung (6) nach Anspruch 1, **dadurch gekennzeichnet, dass** die magnetischen oder magnetisierbaren Elemente eine rohrförmige Form aufweisen.

3. Drehbare Rührvorrichtung (6) nach einem der Ansprüche 1 bis 2, **dadurch gekennzeichnet, dass** die Antriebswelle (6) ein magnetisches Element umfasst, das von einem Permanentmagneten (29) gebildet wird.

4. Drehbare Rührvorrichtung (6) nach einem der Ansprüche 1 bis 3, **dadurch gekennzeichnet, dass** das zweite Ende (23) des rohrförmigen Abschnitts (20) ein magnetisierbares Element umfasst, das von einem Teil (30) gebildet wird, das mindestens teilweise aus einem ferromagnetischen Material hergestellt ist.

5. Drehbare Rührvorrichtung (6) nach einem der Ansprüche 1 bis 4, **dadurch gekennzeichnet, dass** die Antriebswand (26) der Antriebswelle (12) und die Abtriebswand (27) des zweiten Endes (23) des rohrförmigen Abschnitts (20) sich jeweils in einer Ebene senkrecht zur Achse A erstrecken.

6. Drehbare Rührvorrichtung (6) nach einem der Ansprüche 1 bis 5, **dadurch gekennzeichnet, dass** das System von mechanischen Anschlägen mindestens ein an der Antriebswand (26) angeordnetes vorspringendes Antriebsorgan (35) und mindestens eine an der Abtriebswand (27) angeordnete Aufnahme (36) umfasst, wobei das mindestens eine vorspringende Antriebsorgan, sobald es sich in der mindestens einen Aufnahme befindet, einen positiven Antrieb des drehbaren Werkzeugs (7) sicherstellt.

7. Drehbare Rührvorrichtung (6) nach Anspruch 6, **dadurch gekennzeichnet, dass** das mindestens eine vorspringende Antriebsorgan (35) eine Schräge in Form einer Schraube umfasst, die auf einem Kreis mit einem zur Achse A gehörenden Mittelpunkt angeordnet ist, wobei die mindestens eine Aufnahme (36) eine komplementäre Form aufweist.

8. Drehbare Rührvorrichtung (6) nach einem der Ansprüche 1 bis 7, **dadurch gekennzeichnet, dass** sie eine Vorrichtung (38) zum Erkennen des Vorhandenseins des rohrförmigen Abschnitts (20) an der Antriebswelle (12) umfasst, wobei der rohrförmige Abschnitt eine Vergrößerung des Durchmessers im Bereich des magnetischen oder magnetisierbaren Elements umfasst, die einen Strahl der Erkennungsvorrichtung schneidet, wenn er an der Antriebswelle angebracht ist.

9. Drehbare Rührvorrichtung (6) nach Anspruch 8, **dadurch gekennzeichnet, dass** es sich bei der Erkennungsvorrichtung (38) um eine optische Erkennungsvorrichtung handelt, die eine Zelle (39) zum Senden eines Lichtstrahls und eine Zelle (40) zum Empfangen des Strahls umfasst, wobei der rohrförmige Abschnitt (20) den Lichtstrahl schneidet, wenn er an der Antriebswelle (12) angebracht ist.

10. Drehbare Rührvorrichtung (6) nach Anspruch 9, **dadurch gekennzeichnet, dass** die optische Erkennungsvorrichtung mindestens einen optischen Leiter (41, 42) zum Umlenken des Lichtstrahls um 90° umfasst.

11. Drehbare Rührvorrichtung (6) nach einem der Ansprüche 1 bis 10, **dadurch gekennzeichnet, dass** sie einen Elektromotor (10) umfasst, der dazu bestimmt ist, die Antriebswelle (12) anzutreiben.

12. Drehbare Rührvorrichtung (1) nach einem der Ansprüche 1 bis 11, **dadurch gekennzeichnet, dass** die Antriebswelle einen hohlen Abschnitt (18) zum Zuführen von heißem Wasser und/oder Dampf trägt, der bei ihrer Kopplung mit dem rohrförmigen Abschnitt (20) kommuniziert, und dadurch, dass die Rührvorrichtung (6) einen Dampfkasten (11) umfasst, der eine Kammer (15), einen radialen Dampfeinlasskanal, zwei dichte Führungslager (13, 14) für die Antriebswelle umfasst, wobei der hohle Abschnitt (18) die Kammer (15) mit dem rohrförmigen Abschnitt (20) verbindet.

## Claims

1. Rotary stirring device (6) for a beverage preparation machine (1), said device comprising a rotary tool (7) which is rotatable about an axis A and intended to stir a preparation contained in a container (4), and a conduit (24) for conveying hot water and/or steam to the rotary tool, said conveying conduit comprising a tubular portion (20) which extends along the axis A between a first end (22) which is coupled to the rotary tool by means of a first coupling device and a second end (23) which is coupled to a hollow drive shaft (12) by means of a second coupling device in order to make a fluid connection for hot water and/or steam, **characterised in that** the second coupling device is a magnetic coupling device (25) configured to generate a magnetic attraction force along the axis A between a drive wall (26) of the drive shaft and a receiving wall (27) of the second end of the tubular portion so as to transmit the rotational movement of the drive shaft to the rotary tool, the second end of the tubular portion and the drive shaft each comprising a magnetic or magnetisable element, and **in that** the second coupling device comprises a system of mechanical anti-slip stops which ensures automatic alignment between the drive wall (26) of the drive shaft (12) and the receiving wall (27) of the second end (23) of the tubular portion (20) during coupling under the effect of the magnetic attraction force.

2. Rotary stirring device (6) according to claim 1, **characterised in that** the magnetic or magnetisable elements are tubular.

3. Rotary stirring device (6) according to any one of claims 1 to 2, **characterised in that** the drive shaft (6) comprises a magnetic element formed by a permanent magnet (29).

4. Rotary stirring device (6) according to any one of claims 1 to 3, **characterised in that** the second end (23) of the tubular portion (20) comprises a magnetisable element formed by a part (30) made at least partially of a ferromagnetic material.

5. Rotary stirring device (6) according to any one of claims 1 to 4, **characterised in that** the drive wall (26) of the drive shaft (12) and the receiving wall (27) of the second end (23) of the tubular portion (20) each extend in a plane perpendicular to the axis A.

6. Rotary stirring device (6) according to any one of claims 1 to 5, **characterised in that** the system of mechanical stops comprises at least one protruding drive member (35) arranged on the drive wall (26) and at least one receiving housing (36) arranged on the receiving wall (27), the at least one protruding drive member, once it is in place in the at least one receiving housing, positively driving the rotary tool (7).

7. Rotary stirring device (6) according to claim 6, **characterised in that** the at least one protruding drive member (35) comprises a helix-shaped ramp arranged on a circle with a centre belonging to the axis A, the at least one receiving housing (36) having a complementary shape.

8. Rotary stirring device (6) according to any one of claims 1 to 7, **characterised in that** it comprises a device (38) for detecting the presence of the tubular portion (20) on the drive shaft (12), the tubular portion comprising a protuberance in diameter at the level of the magnetic or magnetisable element, which protuberance, when assembled on the drive shaft, intersects a beam from said detection device.

9. Rotary stirring device (6) according to claim 8, **characterised in that** the detection device (38) is an optical detection device comprising a cell (39) emitting a light beam and a cell (40) receiving said beam, the tubular portion (20) intersecting the light beam when assembled on the drive shaft (12).

10. Rotary stirring device (6) according to claim 9, **characterised in that** the optical detection device comprises at least one light guide (41, 42) for deflecting the light beam at 90°.

11. Rotary stirring device (6) according to any one of claims 1 to 10, **characterised in that** it comprises an electric motor (10) for driving the drive shaft (12).

12. Rotary stirring device (1) according to any one of claims 1 to 11, **characterised in that** the drive shaft bears a hollow portion (18) for conveying hot water and/or steam, which portion communicates with the tubular portion (20) when they are coupled and **in that** said stirring device (6) comprises a steam box (11) comprising a chamber (15), a radial steam inlet channel, two sealed bearings (13, 14) for guiding the drive shaft, the hollow portion (18) connecting the chamber (15) to the tubular portion (20).
